# EUROPÄISCHE PATENTSCHRIFT

(11) **EP 3 625 783 B1**
(45) Veröffentlichungstag und Bekanntmachung des Hinweises auf die Patenterteilung: **09.09.2020**
(21) Anmeldenummer: 18724540.2
(22) Anmeldetag: 14.05.2018
(51) Int. Cl.: G08C 17/02, B66C 13/44, G08C 17/04

(54) **STEUERSCHALTER, STEUERSYSTEM UND VERFAHREN ZUR BEDIENUNG EINES KRANS**
CONTROL SWITCH, CONTROL SYSTEM AND METHOD FOR OPERATING A CRANE
COMMUTATEUR DE COMMANDE, SYSTÈME DE COMMANDE ET PROCÉDÉ DE COMMANDE D'UNE GRUE

(30) Priorität: 17.05.2017 DE 102017110715
(43) Veröffentlichungstag der Anmeldung: 25.03.2020
(73) Patentinhaber: Konecranes Global Corporation, 05830 Hyvinkää (FI)
(72) Erfinder: KREBS, Wolfgang, 58300 Wetter (DE); LINDENAU, Thomas, 45721 Haltern am See (DE); WOIDNECK, Frederick, 58300 Wetter (DE); WOLDT, Marco, 44787 Bochum (DE); PERSICO, Giuliano, 58300 Wetter (DE); FREITAG, Holger, 44894 Bochum (DE); ELSPASS, Stefan, 47918 Tönisvorst (DE)
(74) Vertreter: Moser Götze & Partner Patentanwälte mbB
(86) Internationale Anmeldenummer: PCT/EP2018/062380
(87) Internationale Veröffentlichungsnummer: WO 2018/210750

(56) Entgegenhaltungen:
- EP-A1- 2 489 625
- DE-A1-102012 010 721
- DE-U1-202006 017 729
- KR-B1- 101 715 351

## Beschreibung

Die Erfindung betrifft ein Steuersystem, insbesondere Kransteuersystem, zum Bedienen eines Krans mit den Merkmalen des Anspruchs 1. Weiterhin betrifft die Erfindung ein Verfahren zur Bedienung eines Krans mit einem solchen Steuersystem gemäß Anspruch 8.

In der praktischen Anwendung dienen Krane zumeist dem Heben und Senken von Lasten an voneinander unterschiedlichen Orten innerhalb des Arbeitsbereichs der Krane. Alternativ oder in Ergänzung zur Besetzung eines Kranführerstandes erfolgt deren Bedienung zumeist durch Betätigen eines Steuerschalters, der kabelgebunden, beispielsweise in Form eines Hängesteuerschalters, oder kabellos ausgebildet sein kann.

Aus der DE 20 2006 017 729 U1 ist ein Funksteuerungssystem zur Steuerung der Funktionen eines Krans zu entnehmen, welches ein auch als Handsender bezeichnetes erstes Handgerät umfasst. Das erste Handgerät verfügt über eine erste Schnittstelle, die der Signalübertragung zwischen dem ersten Handgerät und wenigstens einem mit einer Kransteuerung verbundenen Masterteil dient. Außerdem umfasst das erste Handgerät eine zweite Schnittstelle, die der Signalübertragung des ersten Handgeräts mit einem zweiten Handgerät dient. Dadurch ist es möglich, dass von den miteinander verbundenen beiden Handgeräten eine oder mehrere Funktion des einen Handgeräts durch das andere Handgerät übernommen werden.

Neben konventionellen mechanisch zu betätigenden physischen Bedienelementen, beispielsweise federnd gelagerten Tasten beziehungsweise Drucktasten, Dreh- oder Schiebereglern und einrastenden oder nicht einrastenden Schaltern, setzen sich bei der Bedienung von Geräten und Maschinen zunehmend Bedienfelder mit berührungssensitiver Oberfläche durch. In Form von zumeist intuitiv bedienbaren Touchscreens finden diese bereits standardmäßige Verwendung in Tablet Computern und Smartphones. Deren Bildschirm, der in seiner visuellen Ausgabe rein virtueller Bedienelemente beispielsweise in Form graphischer Schaltflächen veränderbar ist, erlaubt die Anwahl einer nahezu unbegrenzten Anzahl an unterschiedlichsten Funktionen. Überdies können beispielsweise auch etwaige Betriebsdaten gleichzeitig oder durch Umschalten eingeblendet werden, die eine Grundlage für möglicherweise vorzunehmende Eingaben und Einstellungen oder eine Überwachung liefern.

So geht aus der DE 10 2012 010 721 A1 eine Maschinensteuervorrichtung für eine Maschine, wie beispielsweise einen Kran, hervor, die durch eine Datenverbindung mit einem tragbaren Bedienteil die Steuerung des Krans erlaubt. Bei dem tragbaren Bedienteil kann es sich um ein Smartphone oder einen Tablet Computer handeln, über das/den eine Person den Kran direkt und ohne zusätzliche, spezifische Bedienelemente bedient.

Weiterhin ist der DE 10 2014 216 982 A1 ein Steuersystem für eine technische Anlage, wie beispielsweise einen Kran, zu entnehmen, das eine Steuereinheit der Anlage und einen Steuerschalter umfasst. Das Steuersystem weist eine erste Schnittstelle auf, die für eine Signalübertragung zwischen dem Steuerschalter und der Steuereinheit ausgebildet ist. Über die Bedienung der Anlage mittels des Steuerschalters hinaus ist vorgesehen, dass die Steuereinheit mit einem mobilen Handgerät signalübertragend verbindbar ist. Bei dem Handgerät kann es sich beispielsweise um ein Smartphone oder einen Tablet Computer handeln. Durch die dann vorliegende Umgehung des Steuerschalters kann die Anlage über das mit deren Steuereinheit direkt verbundene mobile Handgerät gesteuert werden.

Ein ähnliches Steuersystem zur Bedienung eines Kettenzugs ist aus der KR 101 715 351 B1 bekannt, da auch hier ein Smartphone zur Bedienung des Kettenzugs eingesetzt werden kann, das parallel zum Steuerschalter mit einer Steuereinheit des Kettenzugs verbindbar ist und damit hinsichtlich seiner Signalübertragung den Steuerschalter des Kettenzugs umgeht.

Neben den offensichtlichen Vorteilen von Touchscreens stellt der tägliche Einsatz insbesondere im Arbeitsbereich von Kranen erhöhte Anforderungen an deren Widerstandsfähigkeit.

Für den vollständigen Ersatz eines Steuerschalters sind handelsübliche mobile Endgeräte daher eher ungeeignet. Demgegenüber geht die Verwendung von speziell auf die industriellen Anforderungen hin ausgestalteten Endgeräten mit entsprechend hohen Kosten einher. Auch kann der vollständige Wegfall eines Steuerschalters die Sicherheit in der Bedienung insbesondere bei standardmäßigen Eingaben herabsetzen, da das Fehlen konventioneller mechanisch zu betätigender physischer Bedienelemente die Haptik mitunter verschlechtert und so die Gefahr von Fehlbedienungen erhöhen kann. Letztlich kann auch die an sich problemlos umsetzbare Integration von Touchscreens in Steuerschaltern in doppelter Hinsicht zu wirtschaftlichen Nachteilen führen, die sich in erhöhten Herstellungskosten und verkürzten Produktzyklen äußern. Angesichts dieser Überlegungen bieten Steuerschalter und Steuersysteme für Krane daher durchaus noch Raum für Verbesserungen.

In der WO 2017/072 281 A1 ist beschrieben, dass zur Steuerung der Bewegung von Gelenkarmen eines Industrieroboters zusätzlich zu einem griffartigen Bewegungsvorgabemittel ein mobiles Handterminal eingesetzt werden kann.

Die DE 10 2013 006 258 A1 offenbart einen Kran, der eine Steuervorrichtung sowie einen mobilen Zielsignalgeber und mit diesem korrespondierende Positionsbestimmungsmittel umfasst. Diese dienen der automatischen Bestimmung der jeweils aktuellen Position des Zielsignalgebers mittels eines in oder an dem Zielsignalgeber angeordneten Transponders, wobei die Antriebsvorrichtungen des Krans so angesteuert werden, dass dessen Lasthaken automatisch zum mobilen Zielsignalgeber hin verfahrbar ist. Der Zielsignalgeber kann dabei in eine tragbare Bedieneinheit, wie bspw. eine Funkfernsteuerung, integriert sein.

Die DE 10 2009 051 819 A1 offenbart ein Sicherungssystem für einen Steuerschalter eines Krans, um dessen alleinige Bedienung durch eine berechtigte Person sicherzustellen.

Die EP 2 168 903 A1 beschreibt ein zur Fernwartung und Fernsteuerung eines Krans mit diesem verbundenes Multifunktionsgerät, welches über eine drahtlose Schnittstelle in signalübertragender Verbindung mit einer Basisstation steht.

Aus der EP 2 489 625 A1 ist ein Verfahren zum Bedienen eines Mobilkrans bekannt.

Vor diesem Hintergrund liegt der vorliegenden Erfindung die Aufgabe zugrunde, ein Steuersystem zur Bedienung eines Krans dahingehend weiterzuentwickeln, dass dieses die insbesondere im industriellen Einsatz notwendige Robustheit und Bedienungssicherheit des Steuerschalters wirtschaftlich mit einem erhöhten Funktionsumfang kombiniert.

Diese Aufgabe wird durch ein Steuersystem mit den Merkmalen des Anspruchs 1 gelöst. Eine weitere Lösung dieser Aufgabe besteht in einem Verfahren zur Bedienung eines Krans mit einem solchen Steuersystem mit den Merkmalen von Anspruch 8. Vorteilhafte Ausgestaltungen der Erfindung sind Gegenstand der jeweils abhängigen Ansprüche.

Erfindungsgemäß wird nun die Anordnung einer zusätzlichen, zweiten Schnittstelle an dem Steuerschalter des Steuersystems vorgeschlagen, die zur Einrichtung einer Kommunikationsverbindung für eine Signalübertragung zwischen dem mobilen Endgerät und dem Steuerschalter ausgebildet ist, um hierüber den Funktionsumfang des Steuerschalters mit Funktionen des mobilen Endgeräts erweitern zu können. Der sich hieraus ergebende Vorteil besteht in der Möglichkeit einer zusätzlichen Kopplung und Einbindung des mobilen Endgerätes, durch das sich der Funktionsumfang des Steuerschalters nahezu beliebig erhöhen lässt. Mit anderen Worten lässt sich also der Funktionsumfang mittels des mobilen Endgeräts erweitern. Das mobile Endgerät unterscheidet sich also insbesondere hinsichtlich seines Funktionsumfangs von dem Funktionsumfang des Steuerschalters. Dementsprechend ist nicht nur das mobile Endgerät selbst, sondern insbesondere auch die zweite Schnittstelle zwischen dem Steuerschalter und dem mobilen Endgerät für eine Signalübertragung ausgebildet, durch die sich der Funktionsumfang des Steuerschalters mit Funktionen des mobilen Endgeräts erweitern lässt. Durch die grundsätzliche Beibehaltung des Steuerschalters steht dieser weiterhin beispielsweise für die standardmäßige Bedienung des Krans zur Verfügung. Dank der zur Gewöhnung beitragenden, unveränderbaren Anordnung der physischen Bedienelemente des Steuerschalters ist weiterhin dessen quasi blinde Nutzung durch die/den Bediener/in gegeben. In Kombination mit einem robusten Aufbau des Steuerschalters wird so ein hohes Maß an Bediensicherheit beibehalten.

Durch die erfindungsgemäße Möglichkeit zur bedarfsweisen Kopplung eines mobilen Endgerätes mit dem Steuerschalter ist es nunmehr möglich, dessen physisch vorhandene Bedienelemente beispielsweise um auf dem mobilen Endgerät darstellbare Schaltflächen zu ergänzen. Auf diese Weise ist der an sich begrenzte Funktionsumfang des Steuerschalters um zusätzliche Möglichkeiten zur Bedienung eines Krans erweiterbar. Alternativ oder in Ergänzung hierzu kann das mobile Endgerät dazu genutzt werden, um beispielsweise relevante Parameter des Krans anzuzeigen, zu ändern und/oder etwaige, in einer Datenbank hinterlegte Hinweise und Hilfen aufzurufen.

Unter einer signalübertragenden Verbindung beziehungsweise einer Signalübertragung über die jeweilige Kommunikationsverbindung wird im Rahmen der Erfindung die Möglichkeit verstanden, wenigstens eine der nachfolgend nur beispielhaft und insofern nicht abschließend genannten Informationen zwischen den so miteinander verbindbaren Geräten beziehungsweise Einheiten, das heißt insbesondere der Steuereinheit, dem Steuerschalter und dem mobilem Endgerät, digital und/oder analog auszutauschen:
- Steuersignale
- Betriebsdaten
- Zustandsdaten
- Parameter
- Bild- und/oder Tondaten.

Nach einer besonders bevorzugten Weiterbildung des grundsätzlichen Erfindungsgedankens ist der Steuerschalter dazu ausgebildet, eine Signalübertragung zwischen einem mobilen Endgerät und der Steuereinheit über die erste Schnittstelle und die zweite Schnittstelle zu ermöglichen. Dies meint, dass in der praktischen Verwendung eine signalübertragende Verbindung zwischen dem mobilen Endgerät und der Steuereinheit vorzugsweise ausschließlich unter einer quasi Zwischenschaltung des Steuerschalters und somit über den Steuerschalter erfolgt. Hierbei nutzt das mobile Endgerät sowohl die erste Schnittstelle des Steuerschalters und die hierüber zwischen Steuereinheit und Steuerschalter eingerichtete Kommunikationsverbindung als auch die zweite Schnittstelle des Steuerschalters und die hierüber zwischen dem Steuerschalter und dem mobilen Endgerät eingerichtete Kommunikationsverbindung, um in eine signalübertragende Verbindung mit der Steuereinheit zu gelangen.

Nach einer bevorzugten Weiterbildung des grundsätzlichen Erfindungsgedankens ist die zur Signalübertragung zwischen dem Steuerschalter und der Steuereinheit vorgesehene erste Schnittstelle für eine drahtlose Signalübertragung ausgebildet, beispielsweise per Funk. Alternativ oder in Ergänzung hierzu ist die für eine Signalübertragung zwischen einem mobilen Endgerät und dem Steuerschalter vorgesehene zweite Schnittstelle für eine drahtlose Signalübertragung ausgebildet. Drahtlose Signalübertragungen erlauben den Wegfall ansonsten notwendiger physischer Leitungen, was einen schnellen Auf- und Abbau sowie eine wirtschaftliche Herstellung erlaubt. Zudem unterliegen derartige drahtlose Verbindungen keinem Verschleiß oder einer etwaigen Beschädigung durch Kabelbruch oder Durchtrennung.

Gemäß einer alternativen Ausgestaltung der Erfindung kann die zur Signalübertragung zwischen dem Steuerschalter und der Steuereinheit vorgesehene erste Schnittstelle für die Einrichtung einer kabelgebundenen Kommunikationsverbindung und darüber erfolgenden Signalübertragung ausgebildet sein. Alternativ oder in Ergänzung hierzu kann selbstverständlich auch die für eine Signalübertragung zwischen einem mobilen Endgerät und dem Steuerschalter vorgesehene, zweite Schnittstelle für die Einrichtung einer kabelgebundenen Kommunikationsverbindung und darüber erfolgenden Signalübertragung ausgebildet sein. Derartige kabelgebundene Kommunikationsverbindungen weisen insbesondere dort Vorteile auf, wo es im Hinblick auf drahtlose Kommunikationsverbindungen zu Störeinflüssen kommen kann und/oder das Umfeld deren Reichweite behindert. Als mögliche Störeinflüsse werden solche angesehen, die entweder die Signalübertragung behindern oder Einfluss auf weitere Anlagen beziehungsweise Anlagenteile nehmen können.

Nach einer besonders bevorzugten Ausgestaltung der Erfindung ist die zweite Schnittstelle und die zugehörige Kommunikationsverbindung für eine Signalübertragung zwischen dem mobilen Endgerät und dem Steuerschalter mittels Nahfeldkommunikation, insbesondere nach dem Übertragungsstandard "Near Field Communication" - kurz: NFC -, ausgebildet. Eine derartige Verbindung ist bereits bauartbedingt für einen ausschließlich über kurze Strecken erfolgenden, kontaktlosen Austausch von Daten vorgesehen. Durch den gewöhnlich auf nur wenige Zentimeter reduzierten und auch im Labor auf wenige Meter beschränkten Wirkbereich dieses Übertragungsstandards ist ein hohes Maß an Sicherheit gegeben, da die Signale von über NFC miteinander gepaarten Geräten nur in unmittelbarer Nähe empfangen werden können. Aus diesem Grund sind auch unerwünschte Störungen von weiter entfernt gelegenen Anlagen beziehungsweise Anlagenteilen nahezu ausgeschlossen.

Je nach Ausgestaltung der Schnittstelle und Kommunikationsverbindung können zur Signalübertragung selbstverständlich auch sämtliche andere, bekannte, drahtlose Übertragungsstandards genutzt werden, wie beispielsweise mittels "Bluetooth" oder ein "drahtloses lokales Netzwerk" (Wireless Local Area Network = WLAN), die in Bezug auf die zu übertragenden Signale allesamt eine große Reichweite und hohe Datenrate ermöglichen. Als weitere Möglichkeiten zur Signalübertragung wären Mobilfunkstandards wie UMTS (= Universal Mobile Telecommunications System) oder "Long Term Evolution" (= LTE) nebst der Erweiterung "Long Term Evolution Advanced" (= LTE Advanced) zu nennen, die allesamt auch den Zugang zum Internet und Mobilfunknetz gestatten. Auch auf einer Sichtverbindung basierende Übertragungsstandards, bei denen elektromagnetische Wellen gesendet und empfangen werden, sind denkbar. Beispielhaft zu nennen ist hier der schon seit langem bekannte Standard "IrDA" (= Infrared Data Association), der eine hohe Sicherheit bei gleichzeitig hoher Datenrate für optische, drahtlose Punkt-zu-Punkt Datenübertragungen mittels Infrarotlicht bietet.

In Bezug auf die zur Signalübertragung zwischen dem Steuerschalter und der Steuereinheit vorgesehene, erste Schnittstelle beziehungsweise Kommunikationsverbindung wird es als vorteilhaft angesehen, wenn diese für eine Signalübertragung mittels eines seriellen Bussystems wie beispielsweise eines so genannten Controller Area Networks - kurz: CAN - ausgebildet ist. Auch der Einsatz eines anderen, für industrielle Applikationen geeigneten Feldbussystems ist in diesem Zusammenhang möglich. Dies gilt unabhängig von einer drahtlosen, beispielsweise funkbasierten oder einer kabelgebundenen Übertragungsart. Hierüber übermittelbare Daten können übertragen werden, wobei insbesondere kabelgebundene Systeme mit einem Minimum an Kabelsträngen auskommen.

Weiterhin ist die Erfindung auf ein Steuersystem gerichtet, welches zur Bedienung eines Krans vorgesehen ist. In diesem Zusammenhang kann das Steuersystem auch als Kransteuersystem benannt werden. Das erfindungsgemäße Steuersystem umfasst einen Steuerschalter sowie ein mobiles Endgerät. In besonders bevorzugter Weise kann es sich bei dem Steuerschalter um den zuvor näher beschriebenen erfindungsgemäßen Steuerschalter handeln. Das mobile Endgerät des erfindungsgemäßen Steuersystems ist über die zweite Schnittstelle und die zugehörige Kommunikationsverbindung zur Signalübertragung mit dem Steuerschalter verbindbar. Die somit in signalübertragender Hinsicht miteinander koppelbaren Einrichtungen aus Steuerschalter und mobilem Endgerät erlauben eine überaus vorteilhafte Erweiterung des ansonsten aufgrund der Anordnung und Funktion seiner physisch vorhandenen und mechanisch betätigbaren Bedienelemente festgelegten Funktionsumfangs des Steuerschalters.

In besonders bevorzugter Weise ist es somit möglich, dass der Steuerschalter und/oder das über die zweite Schnittstelle und die zugehörige Kommunikationsverbindung mit dem Steuerschalter signalübertragend verbundene mobile Endgerät über die erste Schnittstelle und die zugehörige Kommunikationsverbindung signalübertragend mit der Steuereinheit verbunden sind. Mit anderen Worten ist das erfindungsgemäße Steuersystem auf diese Weise vorzugsweise ausschließlich über die erste Schnittstelle mit der Steuereinheit des Krans verbindbar, wobei die signalübertragende Verbindung zwischen dem mobilen Endgerät und der Steuereinheit ausschließlich unter einer quasi Zwischenschaltung des Steuerschalters und somit über den Steuerschalter erfolgt. Sowohl das mobile Endgerät als auch der Steuerschalter können oder müssen also die erste Schnittstelle und die zugehörige Kommunikationsverbindung zwischen dem Steuerschalter und der Steuereinheit zur Signalübertragung nutzen.

Weitergehende Vorteile wurden bereits zuvor im Zusammenhang mit dem erfindungsgemäßen Steuerschalter näher ausgeführt, so dass zur Vermeidung von Wiederholungen auf die Ausführungen hierzu verwiesen wird.

Die vorliegende Erfindung sieht grundsätzlich vor, dass es sich bei dem mobilen Endgerät um ein Tablet Computer und/oder ein Smartphone handeln kann. Selbstverständlich sind auch andere hier nicht im Detail benannte mobile Endgeräte denkbar, die den bekannten Funktionsumfang von Tablet Computern und/oder Smartphones beinhalten und so zur Ergänzung des Steuerschalters geeignet sind. Der Vorteil bei der Verwendung eines Tablet Computers und/oder eines Smartphones liegt in der zumeist intuitiven Benutzung und der mitunter vorhandenen Vielzahl von Schnittstellen.

Die Erfindung beinhaltet ferner ein Verfahren, das zum Bedienen eines Krans mit einem wie zuvor beschriebenen, erfindungsgemäßen Steuersystem dient. Dabei wird ein mit der Steuereinheit eines Krans signalübertragend verbundener Steuerschalter derart mit einem mobilen Endgerät signalübertragend verbunden, dass der im Wesentlichen statische - da physisch festgelegte - Funktionsumfang des Steuerschalters durch, insbesondere softwarebasierte, Funktionen des mobilen Endgeräts erweitert wird. Die sich hieraus ergebenden Vorteile wurden bereits im Zusammenhang mit dem erfindungsgemäßen Steuerschalter und Steuersystem näher verdeutlicht, so dass zur Vermeidung von Wiederholungen auf die entsprechenden Ausführungen hierzu verwiesen wird.

Nach einer bevorzugten Weiterbildung des erfindungsgemäßen Verfahrens werden mittels des mit dem Steuerschalter verbundenen mobilen Endgeräts aktuelle Betriebsdaten des Krans ausgelesen und/oder Parameter des Krans eingestellt. Für die in diesem Zusammenhang stattfindende Signalübertragung wird insbesondere die erste Schnittstelle und die Kommunikationsverbindung zwischen dem Steuerschalter und der Steuereinheit genutzt.

Die zur Funktionserweiterung dienenden und auf dem mobilen Endgerät laufenden Programme können beispielsweise von einem physischen Datenträger aus auf das Endgerät übertragen werden. Besonders bevorzugt können diese auch als Download angeboten werden. Hierzu kann ein mit Zugangsdaten erreichbarer Bereich eines Netzwerks genutzt werden, wobei es sich bei besagtem Netzwerk um ein Intranet oder das Internet handeln kann. In vorteilhafter Weise kann die jeweils erforderliche Anwendungssoftware in etablierten Downloadportalen angeboten und beispielsweise in Form einer auch als App bezeichneten Application Software auf das mobile Endgerät heruntergeladen werden. Durch parallele und zukünftige Weiterentwicklungen kann so der Funktionsumfang stetig erweitert und verbessert beziehungsweise gesteigert werden, ohne dass dies den zwingenden Austausch von Hardware, insbesondere des Kransteuerschalters, verlangt.

Ein Ausführungsbeispiel der Erfindung wird anhand der nachfolgenden Beschreibung näher erläutert. Es zeigen:
Figur 1 eine perspektivische Ansicht eines erfindungsgemäßen Krans und
Figur 2 eine schematische Ansicht eines erfindungsgemäßen Steuersystems des Krans aus Figur 1.

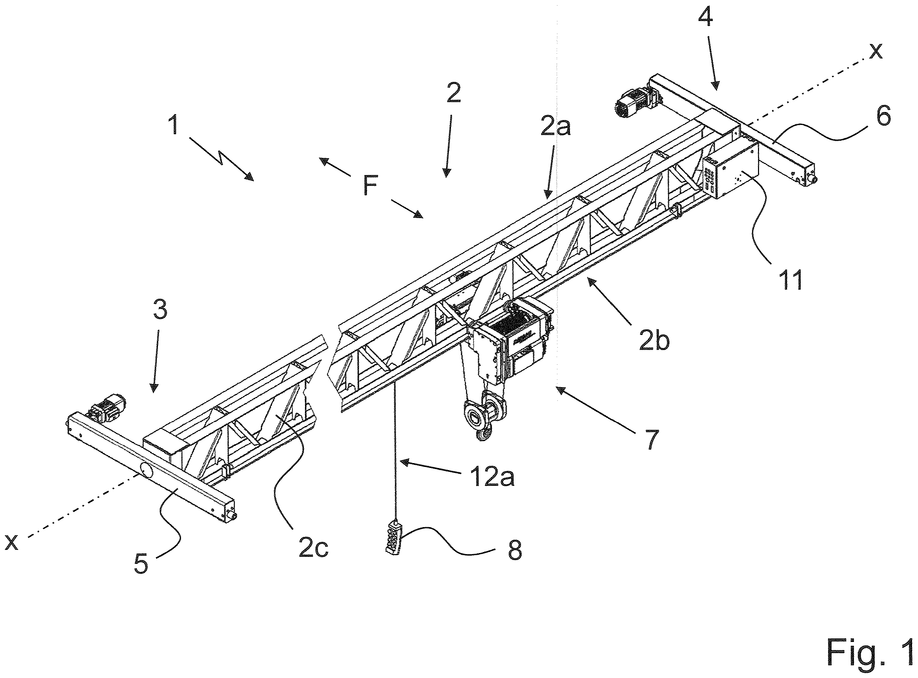

Die Figur 1 zeigt einen beispielhaften Aufbau für einen erfindungsgemäßen Kran 1 in einer perspektivischen Ansicht. Erkennbar ist der Kran 1 als Laufkran in Form eines Ein-Träger-Brückenkrans ausgebildet, der einen entlang einer nicht dargestellten Kranbahn verfahrbar gelagerten Kranträger 2 aufweist. Der Kranträger 2 ist als Fachwerkträger ausgeführt, welcher einen Obergurt 2a und einen Untergurt 2b sowie sich zwischen Ober- und Untergurt 2a, 2b erstreckende Fachwerkstreben 2c besitzt.

Der Kranträger 2 ist in einer im Wesentlichen horizontalen Fahrtrichtung F quer zu seiner Längsrichtung x motorisch verfahrbar. Hierzu ist an den sich gegenüberliegenden Enden 3, 4 des Kranträgers 2 jeweils ein Fahrwerk 5, 6 angeordnet, die sich an jeweils einer hier nicht näher ersichtlichen Kranschiene der Kranbahn abstützen. An dem Kranträger 2, insbesondere an dessen Untergurt 2b, ist eine Krankatze 7 mit einem Hubwerk angeordnet, die sich gemeinsam mit dem Hubwerk parallel zur Längsrichtung x des Kranträgers 2 motorisch entlang des Kranträgers 2 verfahren lässt. Die Bedienung des Krans 1, das heißt insbesondere das Ansteuern von Bewegungen und Funktionen der Fahrwerke 5, 6, der Krankatze 7 und deren Antrieb sowie des Hubwerks, erfolgt über einen Steuerschalter 8, der vorliegend als kabelgebundener Hängesteuerschalter ausgebildet ist.

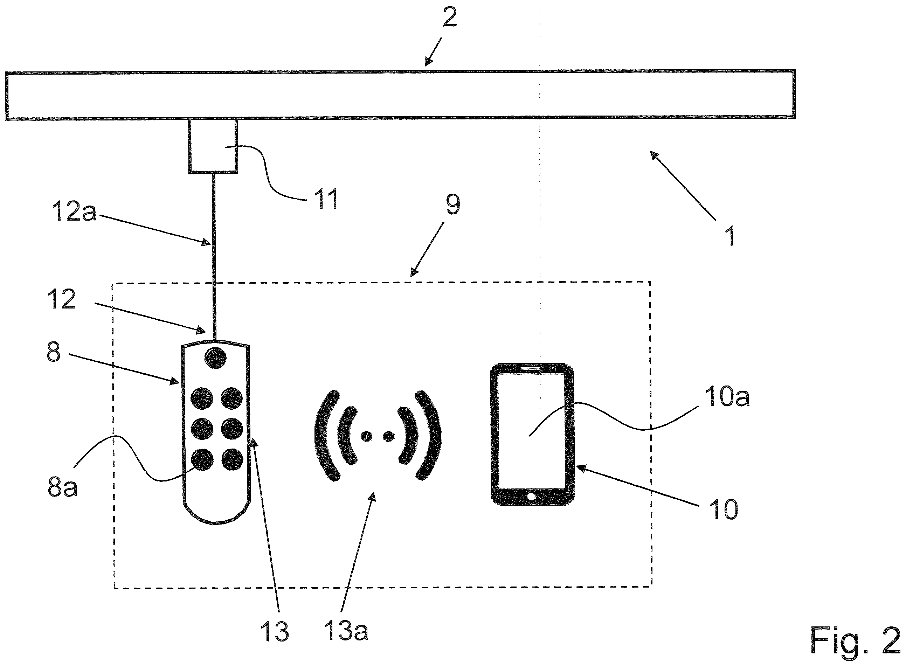

Figur 2 ist die schematische Darstellung eines erfindungsgemäßen Steuersystems 9 zu entnehmen, das neben dem Steuerschalter 8 ein mobiles Endgerät 10 umfasst. Der ebenfalls nur schematisch ersichtliche Kran 1 weist ferner eine Steuereinheit 11 auf, die über eine insbesondere als Steuerleitung dienende Kommunikationsverbindung 12a zwischen der Steuereinheit 11 und dem Steuerschalter 8 verbunden ist. Hierfür weist der Steuerschalter 8 eine erste Schnittstelle 12 auf, die für eine kabelgebundene Signalübertragung zwischen der Steuereinheit 11 und dem Steuerschalter 8 mittels der Kommunikationsverbindung 12a ausgebildet ist. Alternativ hierzu ist auch eine Schnittstelle 12 für eine drahtlose Signalübertragung denkbar, wobei dann die zugehörige Kommunikationsverbindung 12a beziehungsweise Steuerleitung entsprechend drahtlos realisiert ist. Unabhängig von der konkreten Ausgestaltung erfolgt die Signalübertragung zwischen Steuereinheit 11 und Steuerschalter 8 bevorzugt mittels eines seriellen Bussystems beziehungsweise Feldbussystems.

Erkennbar weist der Steuerschalter 8 mehrere konventionelle, mechanisch zu betätigende, physische Bedienelemente 8a in Form von Tasten, insbesondere Drucktasten, und/oder Schaltern auf, während das mobile Endgerät 10 primär ein Bedienfeld in Form eines Touchscreens 10a mit berührungssensitiver Oberfläche umfasst. Das Bedienfeld beziehungsweise dessen berührungssensitive Oberfläche kann je nach verwendeter Technologie auch mit einem geeigneten Stift bedient werden, wenn die Bedienperson Handschuhe trägt, auf die die berührungssensitive Oberfläche nicht reagiert. Der Steuerschalter 8 und damit auch das Steuersystem 9 weist eine zweite Schnittstelle 13 auf, die für eine Signalübertragung über eine Kommunikationsverbindung 13a zwischen dem mobilen Endgerät 10 und dem Steuerschalter 8 vorgesehen ist. Bevorzugt sind die zweite Schnittstelle 13 und die zugehörige Kommunikationsverbindung 13a für eine drahtlose Signalübertragung ausgebildet, die vorliegend mittels Nahfeldkommunikation, insbesondere NFC, erfolgt. Auf diese Weise treten der Steuerschalter 8 und das mobile Endgerät 10 nur innerhalb eines auf wenige Zentimeter reduzierten Wirkbereichs über die Kommunikationsverbindung 13a miteinander in Verbindung, so dass deren lokale Kopplung eine entsprechende räumliche Nähe verlangt. Die so etablierte Reichweitenbeschränkung der Kommunikationsverbindung 13a erhöht die Sicherheit dieser Verbindung, da ein Zugriff von Extern nahezu ausgeschlossen ist. Zudem ergibt sich eine zusätzliche Sicherheit bei Nutzung sicherheitsrelevanter Funktionen über das mobile Endgerät 10 dadurch, dass bei einer räumlichen Trennung, die über den Wirkbereich der Kommunikationsverbindung 13a hinaus geht, die Kommunikationsverbindung 13a zwischen dem Endgerät 10 und dem Steuerschalter 8 automatisch abreißt, das heißt unterbrochen wird. In der konkreten Ausgestaltung kann der Steuerschalter 8 hierzu wenigstens eine NFC Antenne besitzen, über die der Zugriff des mobilen Endgeräts 10 auf den Steuerschalter 8 erfolgt.

Selbstverständlich kann die Kommunikationsverbindung 13a zwischen dem mobilen Endgerät 10 und dem Steuerschalter 8 auch in kabelgebundener Form eingerichtet werden. Die zweite Schnittstelle 13 ist dann in entsprechender Weise ausgebildet. Dies beinhaltet auch die Möglichkeit einer Steckverbindung zwischen dem mobilen Endgerät 10 und dem Steuerschalter 8, die insbesondere eine direkte mechanische Kopplung beispielsweise über wenigstens ein steckbares Mittel ermöglicht.

Bei dem mobilen Endgerät 10 kann es sich bevorzugt beispielsweise um einen Tablet Computer und/oder ein Smartphone handeln.

In der praktischen Anwendung kann der mit der Steuereinheit 11 des Krans 1 verbundene Steuerschalter 8 bei Bedarf über seine zweite Schnittstelle 13 und die Kommunikationsverbindung 13a mit dem mobilen Endgerät 10 signalübertragend verbunden werden. Hierbei kann der Kran 1 eine individuelle Kennung aufweisen, die den Aufbau oder die Nutzung der Kommunikationsverbindung 13a zwischen dem mobilen Endgerät 10 und dem Steuerschalter 8 erlaubt. Beispielsweise kann der Kran 1 beziehungsweise dessen Steuerschalter 8 einen individuellen QR Code (= Quick Response) aufweisen, der über einen hier nicht näher gezeigten Bildsensor des mobilen Endgeräts 10 erfasst und ausgewertet wird. Hierdurch können verbindungswesentliche Informationen erkannt werden, auf deren Basis dann die eigentliche Kopplung über die Kommunikationsverbindung 13a erfolgt oder auf deren Basis die Kommunikationsverbindung 13a freigegeben wird und erst anschließend nutzbar ist. Die mit einem solchen QR Code mögliche Speicherung von einigen Kilobytes ist ausreichend, um die zur Parametrierung des Krans 1 notwendigen Übergabewerte zu übermitteln.

Durch die erfolgreiche Kopplung mit dem mobilen Endgerät 10 kann der Funktionsumfang des Steuerschalters 8 insbesondere um softwarebasierte Funktionen des mobilen Endgeräts 10 erweitert werden. Hierzu kann beim Verbinden des mobilen Endgeräts 10 und des Steuerschalters 8 eine geeignete auch als App bezeichnete Anwendungssoftware auf dem mobilen Endgerät 10 gestartet werden. Alternativ oder in Ergänzung hierzu kann eine solche App von dem mobilen Endgerät 10 beispielsweise von einem Server im Intranet oder Internet zunächst heruntergeladen, dann installiert und anschließend gestartet werden. Die hierfür notwendige Signalübertragung kann beispielsweise über einen Mobilfunkstandard des mobilen Endgeräts 10 erfolgen. Auch kann eine solche App als Schnittstelle des Steuersystems 9 zum Internet dienen, um beispielsweise Schaltpläne sowie Hilfeseiten und spezifische Ersatzteile für den jeweiligen Kran 1 angezeigt zu bekommen, bis hin zu deren direkten Online Bestellung. Weiterhin kann eine solche App als Servicetool fungieren, das Auskunft über etwaige Betriebsdaten des Krans 1 sowie mögliche Fehlermeldungen von der Steuereinheit 11 ausliest und analysiert.

Die Erfindung ermöglicht es also, über Standardfunktionen zur primären Bedienung des Krans 1 hinausgehende Funktionen, insbesondere komplexe Funktionen, auf das mobile Endgerät 10 auszulagern. Standardfunktionen sind beispielsweise das Bewirken einer mittels der Fahrwerke 5, 6 erfolgenden Kranfahrt entlang der Kranbahn, einer Katzfahrt der Krankatze 7 entlang des Kranträgers 2 oder das Heben/Senken eines Lastaufnahmemittels mit oder ohne Last durch das Hubwerk. Es ist auch denkbar, dass die Standardfunktionen zur primären Bedienung über das mobile Endgerät 10 genutzt und insbesondere die entsprechenden Bewegungen des Krans 1 ausgelöst werden können, so dass diesbezüglich eine Redundanz zu den Bedienelementen 8a des Steuerschalters 8 denkbar ist. Komplexe Funktionen können beispielsweise die nachfolgend beschriebene Fehleranalyse und Fehlerbehebung durch Einbindung des Service sein. Dabei ermöglicht die Kommunikation zwischen dem mobilen Endgerät 10 und dem Steuerschalter 8 nicht nur das reine Auslesen beispielsweise aktueller Betriebsdaten des Krans 1 von der Steuereinheit 11, sondern auch konkrete Maßnahmen wie etwa das Einstellen von Parametern für eine etwaige Fehlerbehebung oder eine Funktionsänderung und/oder Funktionserweiterung. Beispielhaft sind in diesem Zusammenhang Kranachsen-Geschwindigkeiten, Kranachsen-Beschleunigungen, Pendeldämpfungswerte und diverse Sicherheitsfunktionen sowie Funktionen der digitalen Steuerungsausgänge oder Betriebsarten als mögliche Parameter zu nennen.

In der praktischen Anwendung kann beispielsweise beim Auftreten eines den Kran 1 außer Betrieb setzenden Fehlers das mobile Endgerät 10 über die zweite Schnittstelle 13 und die Kommunikationsverbindung 13a mit dem Steuerschalter 8 verbunden werden. Auf diese Weise können Informationen über den Fehler an das mobile Endgerät 10 übertragen und entsprechend angezeigt werden. Anschließend oder zeitgleich können hinterlegte Informationen angezeigt werden, die beispielsweise eine Hilfe zur Behebung der Ursache des aufgetretenen Fehlers liefern. Weiterhin kann ein Kontakt zu einem Service angezeigt oder direkt hergestellt werden, sofern notwendig. Über einen Übertragungsstandard des mobilen Endgeräts 10 können so auch aktuelle Daten vom Service abgefragt und/oder an diesen übermittelt werden, so dass dieser beispielsweise zunächst eine externe Hilfestellung liefern kann, ohne selber vor Ort zu sein. Auch kann so eine Einstellung für einen Notbetrieb des Krans 1 erfolgen, der als kurzfristige Lösung die weitere Nutzung des Krans 1 ermöglicht, bis ein Techniker das Problem vor Ort nachhaltig löst.

Insbesondere die Integration eines Touchscreens in den Steuerschalter 8 beziehungsweise dessen Gehäuse kann somit vermieden werden, so dass die Robustheit des Steuerschalters 8 erhalten bleibt, der Funktionsumfang beziehungsweise die Funktionalität jedoch wie oben beschrieben erweitert werden kann.

Selbstverständlich ist die vorliegende Erfindung auch in Bezug auf abweichende und hier nicht näher gezeigte Ausgestaltungsformen des Krans 1 denkbar. So kann dieser alternativ beispielsweise als Ein-Träger-Konsolkran ausgebildet sein, der dann einen frei auskragenden Kranausleger 2 besitzt. Auch die Ausgestaltung als Zwei-Träger-Brückenkran oder als Zwei-Träger-Portalkran ist denkbar, die dann jeweils zwei entsprechende Kranträger 2 umfassen.

### Bezugszeichenliste

- 1: Kran
- 2: Kranträger
- 2a: Obergurt
- 2b: Untergurt
- 2c: Fachwerkstrebe
- 3: Ende
- 4: Ende
- 5: Fahrwerk
- 6: Fahrwerk
- 7: Krankatze
- 8: Steuerschalter
- 8a: physisches Bedienelement
- 9: Steuersystem
- 10: mobiles Endgerät
- 10a: Touchscreen
- 11: Steuereinheit
- 12: erste Schnittstelle
- 12a: Kommunikationsverbindung
- 13: zweite Schnittstelle
- 13a: Kommunikationsverbindung

- F: Fahrtrichtung
- x: Längsrichtung

## Patentansprüche

1. Steuersystem (9) zur Bedienung eines Krans (1) umfassend einen Steuerschalter (8) zur Bedienung des Krans (1) wobei der Steuerschalter (8) eine erste Schnittstelle (12) umfasst, die für eine Signalübertragung zwischen dem Steuerschalter (8) und einer Steuereinheit (11) des Krans (1) ausgebildet ist, und umfassend ein mobiles Endgerät (10), das ein Tablet Computer und/oder ein Smartphone ist, wobei der Funktionsumfang des Steuerschalters (8) mit Funktionen des mobilen Endgeräts (10) erweitert wird, **dadurch gekennzeichnet, dass** der Steuerschalter (8) eine zweite Schnittstelle (13) aufweist, die für eine Signalübertragung zwischen dem mobilen Endgerät (10) und dem Steuerschalter (8) ausgebildet ist, um den Funktionsumfang des Steuerschalters (8) mit Funktionen des mobilen Endgeräts (10) zu erweitern, und dass das mobile Endgerät (10) über die zweite Schnittstelle (13) signalübertragend mit dem Steuerschalter (8) derart verbindbar ist, dass das über die zweite Schnittstelle (13) mit dem Steuerschalter (8) signalübertragend verbindbare mobile Endgerät (10) über die erste Schnittstelle (12) signalübertragend mit der Steuereinheit (11) verbindbar ist, so dass der Funktionsumfang des Steuerschalters (8) mit Funktionen des mobilen Endgeräts (10) erweitert wird.

2. Steuersystem (9) nach Anspruch 1, **dadurch gekennzeichnet, dass** die erste Schnittstelle (12) und/oder die zweite Schnittstelle (13) für eine kabelgebundene oder drahtlose Signalübertragung ausgebildet sind/ist.

3. Steuersystem (9) nach einem der vorherigen Ansprüche, **dadurch gekennzeichnet, dass** die zweite Schnittstelle (13) zur Signalübertragung zwischen dem mobilen Endgerät (10) und dem Steuerschalter (8) mittels Nahfeldkommunikation (NFC) ausgebildet ist.

4. Steuersystem (9) nach einem der vorherigen Ansprüche, **dadurch gekennzeichnet, dass** die erste Schnittstelle (12) zur Signalübertragung zwischen dem Steuerschalter (8) und der Steuereinheit (11) mittels eines seriellen Bussystems (CAN) ausgebildet ist.

5. Kran (1) mit einem Steuersystem (9) nach einem der vorhergehenden Ansprüche.

6. Verfahren zum Bedienen eines Krans (1) mit einem Steuersystem (9) nach einem der vorhergehenden Ansprüche, wobei ein mit einer Steuereinheit (11) des Krans (1) signalübertragend verbundener Steuerschalter (8) mit einem mobilen Endgerät (10) derart signalübertragend verbunden wird, dass der Funktionsumfang des Steuerschalters (8) durch, insbesondere softwarebasierte, Funktionen des mobilen Endgeräts (10) erweitert wird.

7. Verfahren nach Anspruch 6, **dadurch gekennzeichnet, dass** mittels des mobilen Endgeräts (10) aktuelle Betriebsdaten und/oder Parameter des Krans (1) ausgelesen und/oder eingestellt werden.

## Claims

1. Control system (9) for operating a crane (1), comprising a control switch (8) for operating the crane (1), wherein the control switch (8) comprises a first interface (12) which is designed for transmitting signals between the control switch (8) and a control unit (11) of the crane (1), and comprising a mobile device (10) which is a tablet computer and/or a smartphone, wherein the functional scope of the control switch (8) is extended with functions of the mobile device (10), **characterised in that** the control switch (8) has a second interface (13) which is designed for transmitting signals between the mobile device (10) and the control switch (8) in order to extend the functional scope of the control switch (8) with functions of the mobile device (10), and **in that** the mobile device (10) is connectable to the control switch (8) in a signal-transmitting manner via the second interface (13) such that the mobile device (10) connectable to the control switch (8) in a signal-transmitting manner via the second interface (13) is connectable to the control unit (11) in a signal-transmitting manner via the first interface (12), and so the functional scope of the control switch (8) is extended with functions of the mobile device (10).

2. Control system (9) as claimed in claim 1, **characterised in that** the first interface (12) and/or the second interface (13) is/are designed for transmitting signals in a wired manner or wirelessly.

3. Control system (9) as claimed in any one of the preceding claims, **characterised in that** the second interface (13) is designed for transmitting signals between the mobile device (10) and the control switch (8) by means of near field communication (NFC).

4. Control system (9) as claimed in any one of the preceding claims, **characterised in that** the first interface (12) is designed for transmitting signals between the control switch (8) and the control unit (11) by means of a serial bus system (CAN).

5. Crane (1) comprising a control system (9) as claimed in any one of the preceding claims.

6. Method for operating a crane (1) comprising a control system (9) as claimed in any one of the preceding claims, wherein a control switch (8) connected to a control unit (11) of the crane (1) in a signal-transmitting manner is connected to a mobile device (10) in a signal-transmitting manner such that the functional scope of the control switch (8) is extended by, in particular software-based, functions of the mobile device (10).

7. Method as claimed in claim 6, **characterised in that** current operating data and/or parameters of the crane (1) are read out and/or adjusted by means of the mobile device (10).

## Revendications

1. Système de commande (9) destiné à faire fonctionner une grue (1), le système de commande comprenant un commutateur de commande (8) destiné à faire fonctionner la grue (1), le commutateur de commande (8) comprenant une première interface (12) qui est conçue pour transmettre des signaux entre le commutateur de commande (8) et une unité de commande (11) de la grue (1), et comprenant un terminal mobile (10) qui est une tablette informatique et/ou un smartphone, l'étendue fonctionnelle du commutateur de commande (8) étant augmentée avec des fonctions du terminal mobile (10), **caractérisé en ce que** le commutateur de commande (8) comporte une deuxième interface (13) qui est conçue pour transmettre des signaux entre le terminal mobile (10) et le commutateur de commande (8) afin d'augmenter l'étendue fonctionnelle du commutateur de commande (8) avec des fonctions du terminal mobile (10), et **en ce que** le terminal mobile (10) peut être relié au commutateur de commande (8) de manière à transmettre des signaux par le biais de la deuxième interface (13) de sorte que le terminal mobile (10), qui peut être relié au commutateur de commande (8) de manière à transmettre des signaux par le biais de la deuxième interface (13), puisse être relié à l'unité de commande (11) de manière à transmettre des signaux par le biais de la première interface (12) de manière à augmenter l'étendue fonctionnelle du commutateur de commande (8) avec des fonctions du terminal mobile (10).

2. Système de commande (9) selon la revendication 1, **caractérisé en ce que** la première interface (12) et/ou la deuxième interface (13) sont conçues pour transmettre des signaux par fil ou sans fil.

3. Système de commande (9) selon l'une des revendications précédentes, **caractérisé en ce que** la deuxième interface (13) est conçue pour transmettre des signaux entre le terminal mobile (10) et le commutateur de commande (8) au moyen d'une communication en champ proche (NFC).

4. Système de commande (9) selon l'une des revendications précédentes, **caractérisé en ce que** la première interface (12) est conçue pour transmettre des signaux entre le commutateur de commande (8) et l'unité de commande (11) au moyen d'un système de bus série (CAN).

5. Grue (1) comprenant un système de commande (9) selon l'une des revendications précédentes.

6. Procédé de fonctionnement d'une grue (1) comprenant un système de commande (9) selon l'une des revendications précédentes, un commutateur de commande (8), qui est relié à une unité de commande (11) de la grue (1) de manière à transmettre des signaux, est relié à un terminal mobile (10) de manière à transmettre des signaux de sorte que l'étendue fonctionnelle du commutateur de commande (8) est augmentée des fonctions, en particulier logicielles, du terminal mobile (10).

7. Procédé selon la revendication 6, **caractérisé en ce que** des données de fonctionnement et/ou paramètres actuels de la grue (1) sont lus et/ou réglés au moyen du terminal mobile (10).
